# EUROPEAN PATENT APPLICATION

(11) **EP 2 172 697 A1**
(43) Date of publication of application: **07.04.2010**
(21) Application number: 08790153.4
(22) Date of filing: 04.07.2008
(51) Int. Cl.: F21V 7/00, F21S 2/00, F21V 7/05, F21Y 101/02

(54) **OPTICAL REFLECTING PLATE, PLANAR ILLUMINATING LIGHT SOURCE DEVICE AND PLANAR ILLUMINATING DEVICE**

(30) Priority: 23.07.2007 JP 2007191456
(71) Applicant: Opto Design, Inc., Hachioji-shi, Tokyo 192-0364 (JP)
(72) Inventor: SATO, Eiichi, Hachioji-shi Tokyo 192-0364 (JP); FUKUOKA, Kenji, Hachioji-shi Tokyo 192-0364 (JP)
(74) Representative: HOFFMANN EITLE
(86) International application number: PCT/JP2008/001801
(87) International publication number: WO 2009/013858

(57) **Abstract**

An optical reflecting plate is provided with annular reflecting sections, which have reflecting surfaces, respectively, and are concentrically formed at prescribed intervals; opening sections formed between the annular reflecting sections; and connecting sections partially connecting the annular reflecting sections neighboring to each other across the opening section.

## Description

### TECHNICAL FIELD

The present invention relates to an optical reflecting plate and a planar illuminating light source device used in a planar illuminating device used for, for example, LCD backlight devices, illumination boards, and a display device for automobiles, vehicles, or the like.

### BACKGROUND ART

Use of light emitting diodes (LEDs) as light sources for display devices, illumination devices, and the like is discussed because LEDs consume less electricity and generate less heat. However, LEDs have high directionality, and thus require ingenuity in order to obtain uniform light distribution over a wide area.

For example, Patent Document 1 discloses a technique to obtain uniform light by repeating reflection between light reflected from a micro reflecting section in a diffusion layer formed on a reflecting surface of light and a reflector provided in the vicinity of a light emitting diode.

In Patent Document 1, uniform illumination is obtained by disposing over a light source the diffusion layer (i.e., an optical reflecting plate) having the micro reflecting section to reflect light from the light source. Here, the micro reflecting section formed of a reflecting material such as a titanium compound is plurally dotted on the diffusion layer. Therefore, manufacturing thereof is cumbersome and requires high cost.

Patent Document 1: Japanese Patent Application Publication No. 2005-284283

### DISCLOSURE OF INVENTION

An object of the present invention is to provide a simple and low cost optical reflecting plate.

To solve the problem above, the present invention is configured as follows.

According to an aspect of the present invention, an optical reflecting plate of the present invention includes: annular reflecting sections having reflecting surfaces and concentrically formed at prescribed intervals; an opening section formed between the annular reflecting sections; and a connecting section partially connecting the annular reflecting sections neighboring to each other across the opening section.

Preferably, the connecting section is integrally formed with the reflecting sections.

Preferably, the annular reflecting sections are formed in a circular annular shape.

Preferably, the annular reflecting sections are formed in a polygonal annular shape.

Preferably, the annular reflecting sections and the connecting section are each provided with a non-through groove.

According to another aspect of the present invention, a planar illuminating light source device of the present invention has an optical reflecting plate including: annular reflecting sections having reflecting surfaces and concentrically formed at prescribed intervals; an opening section formed between the annular reflecting sections; and a connecting section partially connecting the annular reflecting sections neighboring to each other across the opening section.

According to still another aspect of the present invention, a planar illuminating device of the present invention has a plurality of planar illuminating light source devices having an optical reflecting plate including: annular reflecting sections having reflecting surfaces and concentrically formed at prescribed intervals; an opening section formed between the annular reflecting sections; and a connecting section partially connecting annular reflecting section neighboring to each other across the opening section.

According to the present invention, a simple and low cost optical reflecting plate can be obtained. With the optical reflecting plate of the present invention, a simple and low cost planar illuminating optical device and a planar illuminating device can be obtained.

### BRIEF DESCRIPTION OF THE DRAWINGS

[Fig. 1A] is a plan view of an optical reflecting plate according to a first embodiment of the present invention.
[Fig. 1B] is a sectional view of the optical reflecting plate according to the first embodiment of the present invention.
[Fig. 2] is a plan view of an optical reflecting plate according to a second embodiment of the present invention.
[Fig. 3] is a plan view of an optical reflecting plate according to a third embodiment of the present invention.
[Fig. 4] is a plan view of an optical reflecting plate according to a fourth embodiment of the present invention.
[Fig. 5A] is a diagram of a planar illuminating light source device in which an optical reflecting plate is mounted.
[Fig. 5B] is a sectional view of a planar illuminating light source device in which an optical reflecting plate is mounted.
[Fig. 6] is a perspective view of an appearance of a planar illuminating device according to a sixth embodiment of the present invention.

### BEST MODE(S) FOR CARRYING OUT THE INVENTION

Embodiments of the present invention are described below with reference to the accompanying drawings.

### [First Embodiment]

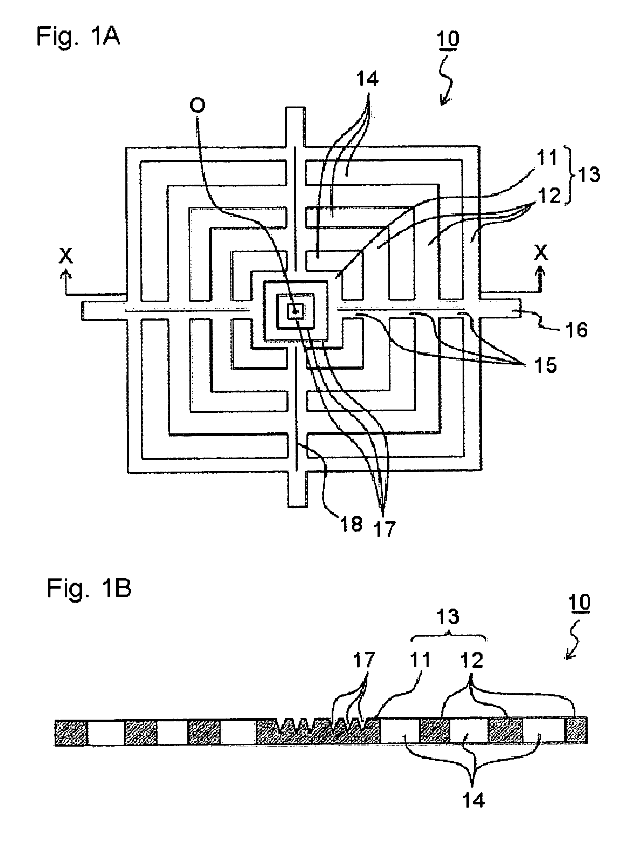

Fig. 1A is a plan view of an optical reflecting plate according to a first embodiment of the present invention.

Fig. 1B is a sectional view of the optical reflecting plate according to the first embodiment of the present invention taken along the line X-X.

This optical reflecting plate 10 is, for example, used in a planar illuminating light source device as being disposed above a LED serving as a light source. The planar illuminating light source device using the optical reflecting plate 10 is later described in detail.

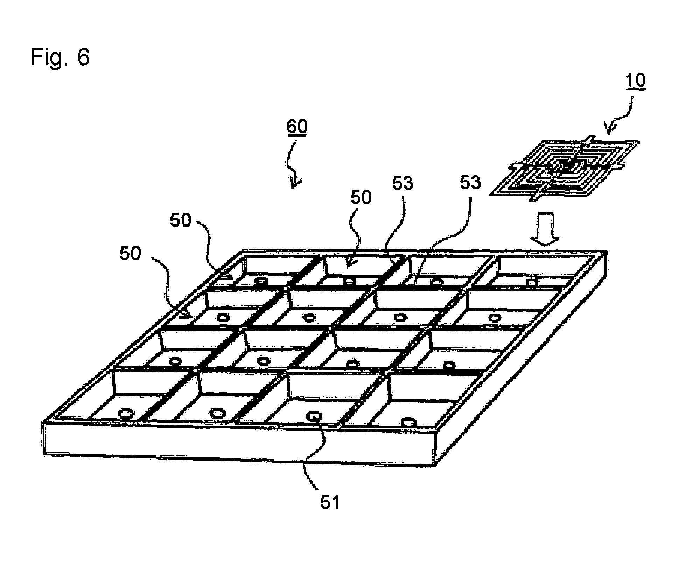

The optical reflecting plate 10 of the present embodiment is rectangular in its entirety. The optical reflecting plate 10 includes: a reflecting section 13 having a rectangular center reflecting section 11 in the center and a plurality of rectangular annular reflecting sections 12 concentric with respect to the center O of the optical reflecting plate 10; and opening sections 14 provided between the center reflecting section 11 and one of the annular reflecting sections 12, and between the annular reflecting section 12 and the annular reflecting section 12. Connecting sections 15 partially and integrally connect the center reflecting section 11 and the annular reflecting sections 12 neighboring to each other and facing to each other across the opening sections 14. One of the annular reflecting sections 12 positioned most outwardly are is integrally formed with supporting sections 16. Upon mounting the optical reflecting plate 10 on a planar illuminating light source device as described later with reference to Fig. 6, the optical reflecting plate 10 is connected to a casing of the planar illuminating light source device via the supporting sections 16.

The center reflecting section 11 and the annular reflecting sections 12 have reflecting surfaces that reflect light at a prescribed ratio.

The optical reflecting plate 10 of the present embodiment can be formed by punching out a single plate having a reflecting surface to form the center reflecting section 11, the annular reflecting sections 12, the opening sections 14, the connecting sections 15, and the supporting sections 16. For the optical reflecting device, low light absorbent materials are used. For example, either a substance obtained by emulsifying particulates of titanium white, or particulates of polytetrafluoroethylene (poly fluoro carbon); or a combination thereof is used.

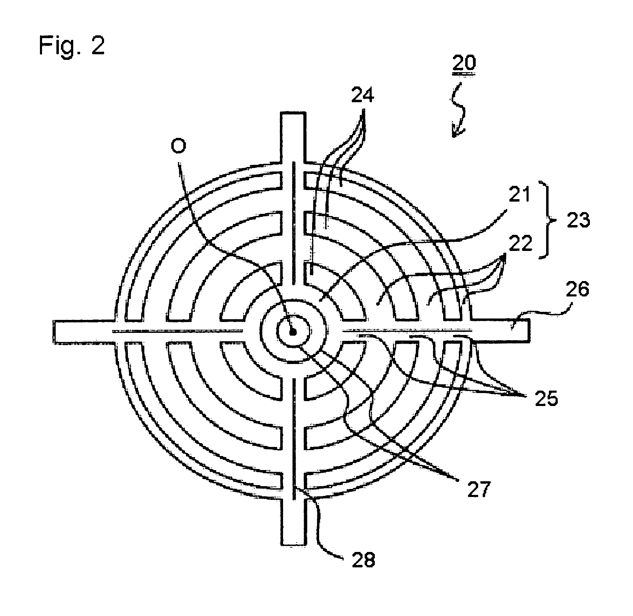

A plurality of rectangular annular non-through (half-cut) grooves 17 are formed on the center reflecting section 11 at prescribed intervals to be concentric with respect to the center O of the optical reflecting plate 10. As shown in Fig. 2, the non-through grooves 17 are formed by curving the optical reflecting plate 10 for a depth that is about a half the thickness thereof. When the optical reflecting plate 10 is mounted on a planar illuminating light source device, a transmission amount of light from a point light source of the planar illuminating light source device is adjusted by the non-through grooves 17 to obtain uniform illumination light. A cross sectional shape of each of the non-through grooves 17 may be arbitrarily formed. For example, it may be a V shape or a U shape.

As the annular reflecting sections 12 are connected via the connecting sections 15, linear reflecting sections radiating from the center of the optical reflecting plate 10 are formed. However, with such linear reflecting sections, non-uniform illumination may be obtained. Therefore, the non-through grooves 18 are provided in the connecting sections 15 and the annular reflecting sections 12 to adjust the light transmission amount so that uniform illumination can be obtained.

Without the connecting sections 15, the center reflecting section 11 and annular reflecting sections 12 are independent from each other, and may fall off from the optical reflecting plate 10. In such a case, the optical reflecting plate may be formed by, for example, attaching thereto the center reflecting section 11 and the annular reflecting sections 12 by using a tape. However, forming of such an optical reflecting plate 10 requires cumbersome procedure and high cost.

The optical reflecting plate 10 of the present embodiment can be formed by punching out the opening sections 14 from a single plate and thus is remarkably easy to form at low cost.

### [Second Embodiment]

Fig. 2 is a plan view of an optical reflecting plate according to a second embodiment of the present invention.

This optical reflecting plate 20 of the present embodiment has a shape of a disk. The optical reflecting plate 20 includes: a reflecting section 23 having a circular center reflecting section 21 at the center and ring shaped annular reflecting sections 22 concentric with respect to the center O of the optical reflecting plate 20; and opening sections 24 through which light can pass provided between each of the sections of the reflecting section 23. Connecting sections 25 connect the center reflecting section 21 and the annular reflecting sections 22 neighboring to each other and facing to each other across the opening sections 24. Supporting sections 26 with which the optical reflecting plate 20 and a casing of a planar illuminating light source device is connected upon mounting the optical reflecting plate 20 thereto are formed at one of the annular reflecting sections 22 positioned most outwardly.

The center reflecting section 21 and the annular reflecting sections 22 respectively have on their surfaces a reflecting surface that reflect light at a prescribed ratio.

In the present embodiment, the connecting sections 25 are integrally formed with the center reflecting section 21 and the annular reflecting sections 22. Similarly, the supporting sections 26 are integrally formed with the annular reflecting sections 22. In the present embodiment, the optical reflecting plate 20 can be formed by punching out the opening sections 24 from a single plate.

A plurality of circular annular non-through (half-cut) grooves 27 are formed on the center reflecting section 21 at prescribed intervals to be concentric with respect to the center O of the optical reflecting plate 20. These non-through grooves 27 are formed by curving the optical reflecting plate 20 for a depth that is about a half the thickness thereof. When the optical reflecting plate 20 is mounted on a planar illuminating light source device, a transmission amount of light from a point light source of the planar illuminating light source device is adjusted with the non-through grooves 27 to obtain uniform illumination light. A cross sectional shape of each of the non-through grooves 27 may be arbitrarily formed. For example, it may be a V shape or a U shape.

As the annular reflecting sections 22 are connected with each other via the connecting sections 25, linear reflecting sections radiating from the center of the optical reflecting plate 10 are formed. However, with such linear reflecting sections, non-uniform illumination may be obtained. Therefore, the non-through grooves 28 are provided in the connecting sections 25 and the annular reflecting sections 22 to adjust the light transmission amount so that uniform illumination can be obtained.

The optical reflecting plate 20 of the present embodiment can be formed by punching out the opening sections 24 from a single plate and thus is easy to form at low cost.

The annular reflecting sections 22 are not limited to a rectangular annular shape and a circular annular shape and can be of an arbitral shape. For example, it may be an ellipsoidal annular shape or a polygonal annular shape.

### [Third Embodiment]

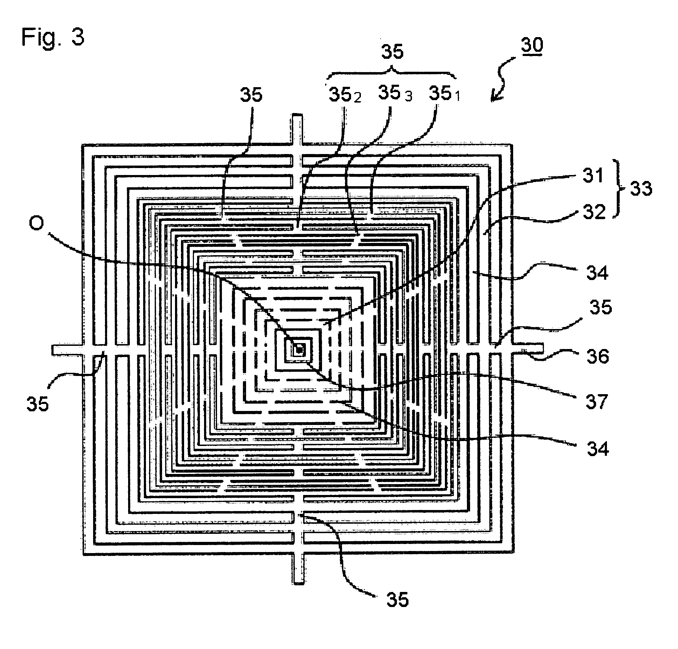

Fig. 3 is a plan view of an optical reflecting plate according to a third embodiment of the present invention.

This optical reflecting plate 30 used in a planar illuminating light source device is disposed above a LED serving as a light source.

The optical reflecting plate 30 of the present embodiment is rectangular in its entirety. The optical reflecting plate 30 includes: a reflecting section 33 having a rectangular center reflecting section 31 in the center and annular reflecting sections 32 having a rectangular ring shape concentric with respect to the center O of the optical reflecting plate 30; and opening sections 34 through which light can pass provided between the center reflecting section 31 and one of the annular reflecting sections 32, and between the annular reflecting section 32 and the annular reflecting section 32. Connecting sections 35 partially connect the center reflecting section 31 and the annular reflecting sections 32 neighboring to each other and facing to each other across the opening sections 34. Supporting sections 36 are formed at one of the annular reflecting sections 32 positioned most outwardly. Upon mounting the optical reflecting plate 30 on a planar illuminating light source device, the optical reflecting plate 30 is connected to a casing of the planar illuminating light source device via the supporting sections 36.

The center reflecting section 31 and the annular reflecting sections 32 respectively have on their surfaces a reflecting surface that reflect light from a light source at a prescribed ratio.

In the present embodiment, the connecting sections 35 are integrally formed with the center reflecting section 31 and the annular reflecting sections 32. Similarly, the supporting sections 36 are integrally formed with the annular reflecting sections 32. The optical reflecting plate 30 of the present embodiment can be formed by, for example, punching out the opening sections 34 from a single plate.

A plurality of rectangular annular non-through (half-cut) grooves 37 are formed on the center reflecting section 31 at prescribed intervals to be concentric with respect to the center O of the optical reflecting plate 30. The non-through grooves 37 are formed by curving the optical reflecting plate 30 for a depth that is about a half the thickness of the optical reflecting plate 30. When the optical reflecting plate 30 is mounted on a planar illuminating optical device, a transmission amount of light from a point light source of the planar illuminating optical device is adjusted with the non-through grooves 37 to obtain uniform illumination light. A cross sectional shape of each of the non-through grooves 37 may be arbitrarily formed. For example, it may be a V shape or a U shape.

With a planar illuminating light source device composed of the optical reflecting plate 30 having the connecting sections 35 radiating straight from the center O, non-uniform illumination may be obtained. In the present embodiment, the connecting sections 35 are provided at positions shifted from one another so that portions in which the connecting sections and the annular reflecting sections are connected do not draw a straight line from the center to the outer edge. Thus, production of non-uniform illumination is prevented and uniform illumination can be obtained.

For example, in Fig. 3, of the connecting sections 35, a connecting section 351 positioned more outwardly than a connecting section 352 is placed rightward with respect to the connecting section 352. Thus, the connecting sections are not collinear. Moreover, a connecting section 353 positioned more inwardly than the connecting section 352 is positioned rightward with respect to the connecting section 352. Thus, the connecting sections are not collinear.

As described above, production of non-uniform illumination can be prevented by shifting the positions of the connecting section 35 for every few annular reflecting section 32 rather than making the connecting positions of the connecting sections 35 and the annular reflecting sections 32 collinear. Here, the level of shifting and positional relationships to obtain uniform light can be attained through experiments.

Further, non-through grooves may be provided on the connecting sections 35 and the reflecting sections 32 to adjust a transmission amount of light so that uniform illumination can be obtained.

Without the connecting sections 35, the center reflecting section 31 and the annular reflecting sections 32 are independent from each other, and may fall off from the optical reflecting plate 30. In this case, the optical reflecting plate may be formed by, for example, attaching thereto the center reflecting section 31 and the annular reflecting sections 32 by using a tape. However, forming of such an optical reflecting plate 30 requires cumbersome procedure and high cost.

The optical reflecting plate 30 of the present embodiment can be formed by punching out the opening sections 34 from a single plate and thus is easy to form at a low cost.

### [Fourth Embodiment]

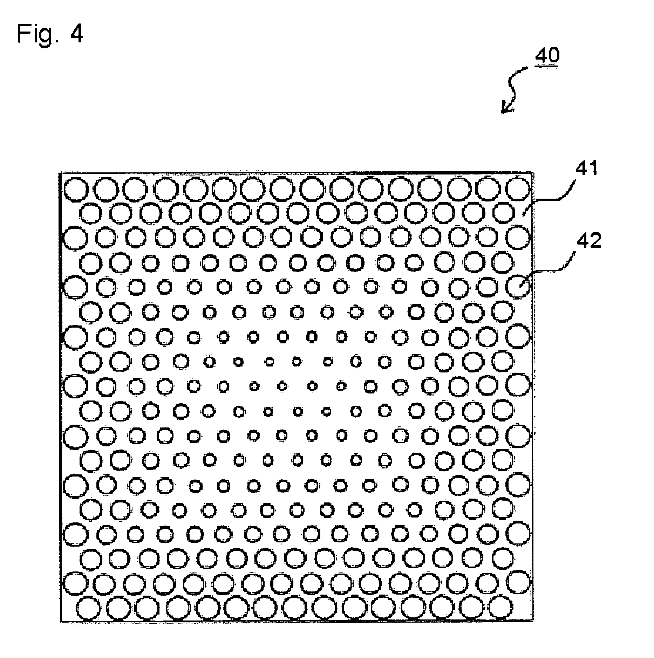

Fig. 4 is a plan view of an optical reflecting plate according to a fourth embodiment of the present invention.

This optical reflecting plate 40 according to the present embodiment includes a reflecting section 41 reflecting light at a prescribed ratio and a plurality of opening sections 42 through which light pass. The reflecting section 41 has a reflecting surface that reflects light at a prescribed ratio. Each of the opening sections 42 is a circular through hole and a plurality thereof is formed. The shape of the opening section 42 is not limited to a circular shape but can be of an arbitral shape. For example, it may be of a rectangular shape.

The opening sections 42 are so formed that a part of the reflecting section does not fall off from the optical reflecting plate 40. If the opening sections 42 are formed in a circular annular shape, the reflecting section 41 at the inner side of the opening sections 42 is separated to fall off from the optical reflecting plate 40 body. In such a circumstance, a single optical reflecting plate can be formed by attaching the reflecting section by using a tape as described above. However, in this case, complex manufacturing process and high cost are required.

By having the opening sections 42 so formed that the part of the reflecting section 41 does not fall off from the optical reflecting plate 40, the optical reflecting plate 40 can be formed of a single plate.

The optical reflecting plate 40 according to the fourth embodiment of the present invention is formed by forming opening sections through which light pass by punching out a single plate in prescribed positions. Thus, a simple and low cost optical reflecting plate can be obtained.

Diameters of the opening sections 42 are formed to be larger as it gets outward from the center. Thus, in the optical reflecting plate 40 mounted on the planar illuminating optical device, a transmission (passing) amount of light from a point light source of the planar illuminating optical device is adjusted to obtain uniform illumination.

### [Fifth Embodiment]

A planar illuminating light source device having an optical reflecting plate according to an embodiment of the present invention is described below.

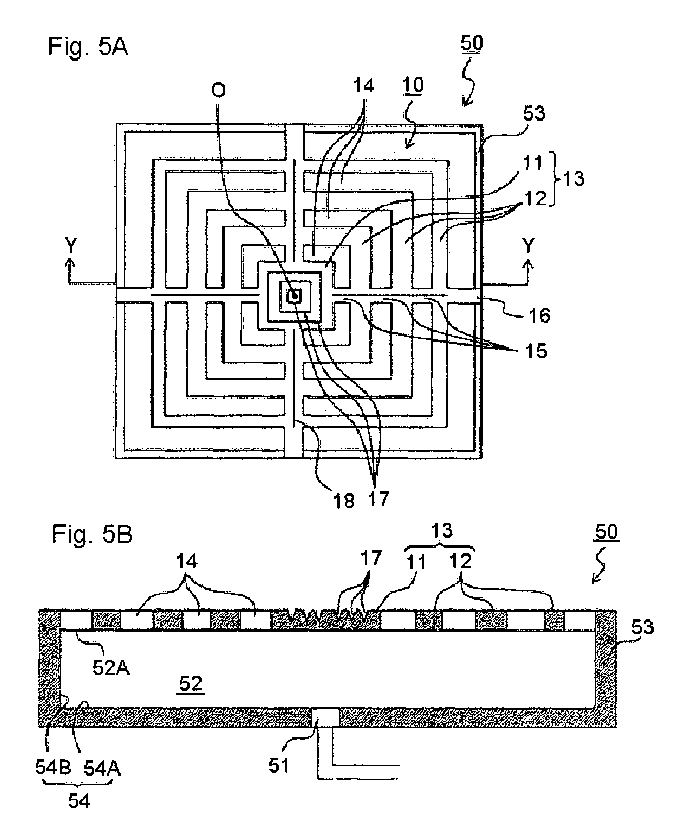

Fig. 5A is a plan view of a planar illuminating light source device mounted with an optical reflecting plate and Fig. 5B is a cross sectional view of the planar illuminating light source device taken along the line Y-Y.

This planar illuminating light source device 50 according to the present invention includes: a group of light sources 51 configured by combining one or a plurality of light radiating bodies such as a LED; an optically transmissive light guide body 52 propagating light from the light sources 51 and having a radiation surface 52A at a prescribed position in the radiation direction of the light; and an open casing 53 closing surfaces of the light guide body 52 except the radiation surface 52A and having the light sources 51 arranged substantially at the center.

In the present embodiment, as the casing 53, a cuboid of 10 cm x 10 cm x 1.5 cm (height) is used, for example. However, the size of the casing 53 is not limited thereto. A material forming the casing 53 is not specifically limited. For example, the casing 53 is formed of metal or synthetic resin.

The light guide body 52 can be formed of, for example, optical glasses. Also, highly transmissive plastics such as acrylic resin or flexible and transmissive plastics such as silicon resin can be used. The light guide body 52 may be gas or liquid. In the present invention, a description is given with an example of a case where the light guide body 52 is air.

At an entirety of an area between the casing 53 and the light guide body 52, i.e., an inner surface of the casing 53, an inner reflecting section 54 as inner reflecting means including a bottom reflecting section 54A and a side reflecting section 54B. The optical reflecting plate 10 is provided on the radiation surface 52A, and a surface of the optical reflecting plate 10 facing the light source has a reflecting surface.

The optical reflecting plate 10 according to the first embodiment is used as the optical reflecting plate of the planar illuminating light source device 50 according to the present embodiment.

Low light absorbent materials are used for both the inner reflecting section 54 and the optical reflecting plate 10. The inner reflecting section 54 and the optical reflecting plate 10 are made of either a substance obtained by emulsifying particulates of titanium white or particulates of polytetrafluoroethylene (poly fluoro carbon), or a combination thereof.

The optical reflecting plate 10 includes: the reflecting section 13 having a reflecting surface 55a disposed on the radiation surface 52A and reflects light propagating inside the light guide body 52 at a prescribed ratio; and the plurality of opening sections 14 through which light from the light sources 51 pass and formed between more than one such reflecting section. The optical reflecting plate 20 is connected to side walls of the casing 53 via the supporting sections 16.

As the simple and low cost optical reflecting plate is used, the planar illuminating optical device 50 according to the present embodiment can be simple and obtained at low cost.

### [Sixth Embodiment]

Fig. 6 is a perspective view of an appearance of a planar illuminating device according to a sixth embodiment of the present invention.

This planar illuminating device 60 according to the present embodiment is configured by arranging a plurality of planar illuminating light source devices in a matrix. Here, the planar illuminating device 50 according to the fifth embodiment is used as the planar illuminating light source device and the same or corresponding elements are given the same reference numerals.

For easier understanding, the optical reflecting plate 10 arranged plurally in the planar illuminating device 60 are all taken out therefrom, and descriptions thereof are omitted from the drawing except for one optical reflecting plate 10. In effect, the optical reflecting plate 10 is provided for each planar reflecting light source device 50.

With the planar illuminating device according to the present invention, an area of uniform illumination obtained from each planar illuminating light source device 50 can be arbitrarily enlarged. Therefore, by arranging a plurality of planar illuminating light source devices 50 in a matrix, uniform illumination light can be obtained at the desired range of area. Moreover, with the low cost optical reflecting plate, the planar illuminating device can be obtained at low cost.

## Claims

1. An optical reflecting plate comprising:
a plurality of annular reflecting sections having reflecting surfaces and concentrically formed at prescribed intervals;
an opening section formed between the annular reflecting sections; and
a connecting section partially connecting the annular reflecting sections neighboring to each other across the opening section.

2. The optical reflecting plate according to claim 1, wherein the connecting section and the reflecting sections are integrally formed.

3. The optical reflecting plate according to claim 1 or 2, wherein the annular reflecting sections are formed in a circular annular shape.

4. The optical reflecting plate according to claim 1 or 2, wherein the annular reflecting sections are formed in a polygonal annular shape.

5. The optical reflecting plate according to claim 1 or 2, wherein the annular reflecting sections and the connecting section are each provided with a non-through groove.

6. A planar illuminating light source device comprising the optical reflecting plate according to claim 1 or 2.

7. A planar illuminating device comprising plurally the planar illuminating optical device according to claim 6.

## Amended claims

### Amended claims under Art. 19.1 PCT

**1.** An optical reflecting plate comprising:
a plurality of annular reflecting sections having reflecting surfaces and concentrically formed at prescribed intervals;
an opening section formed between the annular reflecting sections; and
a connecting section partially connecting the annular reflecting sections neighboring to each other across the opening section.

**2.** The optical reflecting plate according to claim 1, wherein the connecting section and the reflecting sections are integrally formed.

**3.** The optical reflecting plate according to claim 1 or 2, wherein the annular reflecting sections are formed in a circular annular shape.

**4.** The optical reflecting plate according to claim 1 or 2, wherein the annular reflecting sections are formed in a polygonal annular shape.

**5.** The optical reflecting plate according to claim 1 or 2, wherein the annular reflecting sections and the connecting section are each provided with a non-through groove.

**6.** (Amended) A planar illuminating light source device comprising a light source at a center of an area below the optical reflecting plate according to claim 1 or 2.

**7.** A planar illuminating device comprising plurally the planar illuminating optical device according to claim 6.
